# EUROPEAN PATENT APPLICATION

(11) **EP 4 653 313 A1**
(43) Date of publication of application: **26.11.2025**
(21) Application number: 24305805.4
(22) Date of filing: 23.05.2024
(51) Int. Cl.: B64C 13/04

(54) **COCKPIT CONTROLLER INCEPTOR WITH YAW CONTROL BY LATERAL DISPLACEMENT**

(71) Applicant: Ratier-Figeac SAS, 46101 Figeac Cedex (FR)
(72) Inventor: LABRY, Pierre-Jaques, 46100 Faycelles (FR)
(74) Representative: Dehns

(57) **Abstract**

A cockpit control inceptor (10,100) for an aircraft comprising an armrest (12,120) configured to receive the forearm of a user and to be operated by the forearm of the user in at least one direction. A first end (13,130) of the armrest is coupled to a handle; wherein the armrest (12,120) is connected to a fixed part of the cockpit control inceptor (10,100), wherein the armrest (12,120) is configured to move relative to the fixed part of the cockpit control inceptor (10,100) to provide a first aircraft control command.

## Description

### TECHNICAL FIELD

The example shown herein relates generally to a cockpit control inceptor for an aircraft control.

### BACKGROUND

Conventionally on aircrafts, the pitch axis and roll axis are controlled through a centre or side stick, and yaw axis is controlled through pedals. For example, the pilot can control the pitch by deflecting a grip of the centre or side stick around the aircraft side-to-side axis for providing a nose up or a nose down command to the aircraft, the pilot can control the roll by deflecting the grip around the aircraft longitudinal axis, providing a roll left or roll right command to the aircraft and the pilot can control the yaw by pushing left or right pedal, providing a nose left or a nose right command to the aircraft. To save weight, the pedals may be removed and replaced by a third control axis on the side stick. Some side sticks already implement yaw control by rotating of the grip around its vertical axes. However, there is a drawback concerning undesired coupling between different axes during operations. The need to address this is to implement yaw control on a third axis with less possible undesired coupling. There is therefore a need for an improved cockpit control inceptor.

### SUMMARY

According to a first aspect, a cockpit control inceptor for an aircraft comprising an armrest configured to receive a forearm of a user and to be operated by the forearm of the user in at least one direction, wherein a first end of the armrest is coupled to a handle, wherein the armrest is connected to a fixed part of the cockpit control inceptor, wherein the armrest is configured to move relative to the fixed part of the cockpit control to provide a first aircraft control command. Preferably, the armrest may be connected to the fixed part of the aircraft directly or through one or more intermediate parts. Advantageously, suitable aircraft control command can be assigned to the armrest and the handle.

The armrest may be configured to be displaced around a first axis defined at a second end of the armrest, preferably the first axis is a vertical axis. The displacement of the armrest around the first axis may be configured to provide the first aircraft control command. The cockpit control inceptor may comprise a sensor for sensing the position of the armrest to create the first aircraft control command. The aircraft control command described in the present invention are used to control an aircraft's attitude such as yaw, pitch, roll or steering.

Preferably, the handle coupled to the armrest is a side stick. Preferably, the side stick is configured to rotate around a side-to-side or transverse axis of the armrest to provide a second aircraft control command. Further preferably, the side stick is configured to displace around a longitudinal axis of the armrest to provide a third aircraft control command. The armrest may also be configured to be displaced around its longitudinal axis to provide an additional aircraft control command.

Optionally, the armrest may be configured to pivot around a second axis defined at the second end of the armrest. Preferably, the second axis is a transverse axis of the armrest. The pivotal movement of the armrest around the second axis may be configured to provide a fourth aircraft control command. Preferably, the displacement is a vertical displacement of the first end of the armrest with the pivot at the second end of the armrest.

Optionally, the armrest may also be translatable in one or more directions and/or pivotable around its own axis and/or pivotable around any chosen axis and/or movable according to a combination of translation and rotation to command one or more aircraft control units.

In one embodiment, the first aircraft control command is configured to control a yaw of the aircraft. Additionally or alternatively, the second aircraft control command may be configured to control a pitch of the aircraft. Additionally or alternatively, the third aircraft control command may be configured to control a roll of the aircraft. Advantageously, the pitch and roll are controlled by the wrist and the yaw is controlled by the forearm which reduces the coupling between the three aircraft control commands or axes. It also eliminates the need for a rudder pedal, reducing weight and cost.

In another embodiment, the first aircraft control command may be configured to control a yaw of the aircraft. Additionally or alternatively, the second aircraft control command may be configured to control a brake and thrust of the aircraft. Additionally or alternatively, the third aircraft control command may be configured to control a roll of the aircraft. Additionally or alternatively, the fourth aircraft control command may be configured to control a pitch of the aircraft. Advantageously, improving the ergonomics by separating the aircraft control commands into two groups. In this embodiment, the yaw and pitch are controlled by the forearm and the roll and thrust/brake are controlled by the wrist. Advantageously, the rudder and brake pedal units are eliminated from the cockpit to reduce weight and cost.

In combination with any of the above embodiments, the handle may be configured to rotate around its vertical axis relative to the armrest to provide a fifth aircraft control command. The fifth aircraft control command may be configured to steer an aircraft nose wheel. This fifth aircraft control command can be combined with the above-mentioned aircraft control commands.

The cockpit control inceptor for an aircraft may further comprise a grip on the side stick configured to provide friction between the side stick and the fingers or hand of the user. Advantageously, unintentional slipping of the hand from the side stick during operation is avoided.

According to a second aspect, a method of controlling a cockpit control inceptor for an aircraft is provided. The method includes providing an armrest to receive a forearm of a user and to be operated by the forearm of the user in at least one direction, wherein a first end of the armrest is coupled to a handle, wherein the handle is preferably a side stick; and providing a first aircraft control command by moving the armrest relative to the fixed part of the cockpit inceptor.

The method may further include providing the first aircraft control command by displacement of the armrest around a first axis defined at a second end of the armrest, preferably the first axis is a vertical axis, and/or providing a second aircraft control command by rotating the side stick around a side-to-side axis of the armrest; and/or providing a third aircraft control command by displacing the side stick around a longitudinal axis of the armrest; and/or providing a fourth aircraft control command by pivoting the armrest around a second axis, defined by the second end of the armrest, wherein the second axis is a transverse axis of the armrest.

The method may further include controlling, by the first aircraft control command a yaw of the aircraft; controlling, by the second aircraft control command a pitch of the aircraft; and controlling, by the third aircraft control command a roll of the aircraft.

The method may further include controlling, by the first aircraft control command a yaw of the aircraft; controlling, by the second aircraft control command a brake and thrust of the aircraft; controlling, by the third aircraft control command a roll of the aircraft; and controlling by the fourth aircraft control command a pitch of the aircraft.

The method may further include providing a fifth aircraft control command by rotating the handle around its vertical axis relative to the armrest and steering by the fifth aircraft control command an aircraft nose wheel.

According to a third aspect, an aircraft control system is provided. The system includes a cockpit control inceptor according to that described above.

### BRIEF DESCRIPTION OF THE DRAWINGS

Figure 1 shows a side stick of prior art.
Figure 2 shows a first embodiment of a cockpit control inceptor.
Figure 3 shows a second embodiment of a cockpit control inceptor.

### DETAILED DESCRIPTION

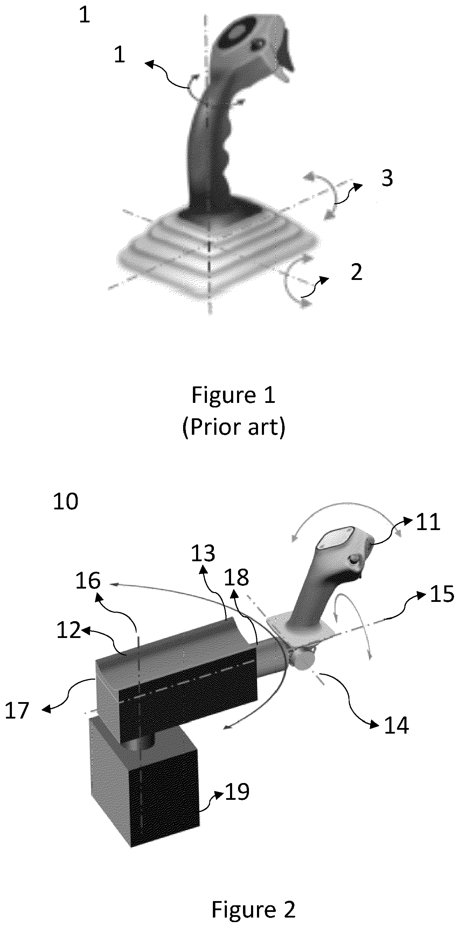

A side stick 1 of the prior art is shown in Figure 1 with three axes. Yaw control 1 of the side stick is achieved by rotating of the grip around its vertical axis through the wrist. The pitch 2 of the aircraft is controlled by deflecting the grip around the side-to-side axis. The roll 3 of the aircraft is controlled by deflecting the grip around the longitudinal axis of the aircraft. The side stick of the prior art implements the yaw control by rotating of the grip around its vertical axis through the wrist. This allows elimination of the rudder pedals. However, this implementation of the yaw control on the side stick by adding a third axis causes possible undesired coupling between the axes during operations. The present application aims to alleviate this problem.

Figure 2 shows a first embodiment of the cockpit control inceptor 10. The cockpit control inceptor 10 for an aircraft comprises a handle 11 and an armrest 12. The handle may be a side stick 11. The armrest 12 is configured to receive a forearm of a user and to be operated by the forearm of the user in at least one direction. A first end 13 of the armrest 12 is coupled to the side stick 11. The armrest 12 is connected to a fixed part of the cockpit control inceptor 10. The armrest 12 is configured to move relative to the fixed part of the cockpit control inceptor to provide a first aircraft control command. The armrest may displace around a first axis defined at a second end 17 of the armrest 12. The first axis is preferably a vertical axis. The cockpit control inceptor 10 may further comprise a sensor for sensing the position of the armrest to provide the first aircraft control command. The side stick 11 may be configured to rotate around a side-to-side axis or transverse axis 14 providing a second control. The side stick 11 may be configured to displace around a longitudinal axis 15 of the armrest providing a third aircraft control command.

According to the first embodiment, the first aircraft control command may be configured to control a yaw of the aircraft. The second aircraft control command may be configured to control a pitch of the aircraft. The third aircraft control command may be configured to control a roll of the aircraft.

The first aircraft control command may be operated by the forearm of the user. The second and third aircraft control commands may be operated by the wrist of the user. The undesired coupling between the axes during operation may be eliminated or at least minimised.

Further, the side stick 11 may have a grip to provide friction between the fingers and the side stick. The grip may be made of rubber. The grip may have a textured surface.

The cockpit control inceptor 10 for an aircraft comprises coupling means 18 may be configured to mechanically couple the armrest to the side stick. The coupling means may have a cylindrical rod shape. The length of the coupling means may be adjusted by length adjusting means. With the help of the length adjusting means, the position of the side stick may be adjusted so that the wrist of the pilot may be placed thereon without any strain on the forearm.

The cockpit control inceptor 10 can be mounted on the cockpit console by means of a support 19 provided along the vertical axis 16 relative to the armrest 12 at the second end 17 of the armrest 12.

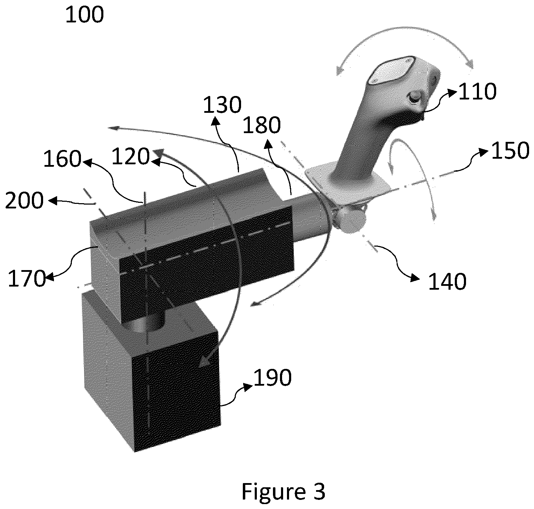

Figure 3 shows a second embodiment of a cockpit control inceptor 100. This embodiment shows four controls of the cockpit control inceptor 100. The cockpit control inceptor 100 comprises a handle 110 and an armrest 120. The handle may be a side stick 110. The armrest 120 is configured to receive a forearm of a user and to be operated by the forearm of the user in at least one direction. A first end 130 of the armrest 120 is coupled to the side stick 110. The armrest 120 is connected to a fixed part of the cockpit control inceptor 100. The armrest 120 is configured to move relative to the armrest 120 defined at a second end 170 of the armrest to provide a first aircraft control command. The armrest 120 displaces around a first axis defined at a second end 170 of the armrest 120, preferably the first axis is a vertical axis 160. Preferably, the vertical axis 160 is located such that it corresponds to the location of the user elbow. The cockpit control inceptor comprises a sensor for sensing the position of the armrest to provide the first aircraft control command. The side stick 110 may be configured to rotate around a side-to-side axis 140 providing a second aircraft control command. The side stick 110 is configured to displace around a longitudinal axis 150 of the armrest providing a third aircraft control command. The armrest 120 may be configured to displace about a pivot point defined around a horizontal axis 200, which may be perpendicular to the armrest axis 150 of the armrest to provide a fourth aircraft control command. The first control may be configured to aircraft control command a yaw of the aircraft. The second aircraft control command may be configured to control a brake and thrust of the aircraft. The third aircraft control command may be configured to control a roll of the aircraft. The fourth aircraft control command may be configured to control a pitch of the aircraft.

A cockpit control inceptor 100 for an aircraft may further provide a fifth aircraft control command. The handle may be configured to rotate around a vertical axis and relative to the armrest to provide the fifth aircraft control command. Preferably, the handle may rotate around its vertical axis or around a vertical axis located between the side stick vertical axis and the armrest vertical pivot axis, further preferably a vertical axis corresponding to a user wrist area. The fifth aircraft control command may be configured to steer an aircraft nose wheel. The fifth aircraft control command may be employed in combination with the first or the second embodiment.

The armrest may also be translatable in one or more directions and/or pivotable around its own axis and/or pivotable around any chosen axis and/or movable according to a combination of translation and rotation, in order to command one or more aircraft control units.

The advantage of the cockpit control inceptor 100 may be pitch, roll, and yaw and additionally the thrust and brake may be provided on a single cockpit control inceptor. This allows removal of rudder and brake pedal units, and the throttle quadrant, which saves weight and the cost. The improved ergonomics may be achieved by separating aircraft control axis in two groups that is yaw and pitch being controlled through the forearm and the roll and thrust-brake being controlled through the wrist.

The cockpit control inceptor 100 for an aircraft may further comprise a coupling means 180 configured to mechanically couple the armrest 120 to the side stick 110, such as a strap, glove or other suitable means. Advantageously, the armrest 120 and the side stick 110 have improved ergonomics.

The cockpit control inceptor 100 for an aircraft may further comprise length adjusting means configured to adjust the position of the side stick 110 at a desired distance. Thus, the length of the armrest 120 would be adjusted suitably by each pilot to position their arm comfortably.

The cockpit control inceptor 100 for an aircraft may further comprise locking means configured to lock the side stick 110 at a desired length. This prevents the side stick 110 from accidentally slipping during operation. Advantageously, the length may be kept to a minimum and/or adapted to the length of user's forearm length so that the roll axis may be as close as possible to the wrist.

The armrest 120 may have a concave upper surface, for instance a groove extending along the armrest axis on an upper side of the armrest, to receive and to support to the forearm. Other means such as strap, sleeve, or glove can be provided to support the forearm and/or the hand of the pilot. Advantageously, this further improves the ergonomics.

The armrest 120 may further comprise an accelerometer (not shown) on the second end 170, namely on a fixed side or on a fixed part of the aircraft, to perform an active compensation of the accelerations on the armrest 120 and avoid untimely armrest 120 movement under accelerations of the aircraft.

A method of controlling a cockpit control inceptor 10,100 for the aircraft of the first embodiment includes providing an armrest 12,120 to receive a forearm of the user and to be operated the forearm of the user in at least one direction, wherein a first end of the armrest is coupled to a handle, providing a first aircraft control command by moving the armrest 12, 120 relative to the fixed part of the cockpit inceptor 10, 100. The handle is preferably a side stick. The aircraft may be controlled by moving the armrest around a first axis defined at the second end of the armrest and/or by pivoting the armrest around a second axis defined at the second end of the armrest. The armrest may be connected to a fixed part of the cockpit control inceptor. The method may further include providing a second aircraft control command by rotating the side stick around a side-to-side axis of the armrest; and/or providing a third aircraft control command by displacing the side stick around a longitudinal axis of the armrest.

The method of controlling the cockpit control inceptor of the first embodiment may include controlling by the first aircraft control command a yaw of the aircraft; controlling by the second aircraft control command a pitch of the aircraft; and controlling by the third aircraft control command a roll of the aircraft.

The method of the second embodiment further includes the controls as mentioned in the method of the first embodiment and may further include providing a fourth aircraft control command by pivoting the armrest about a pivot point defined by the second end of the armrest. Preferably, the displacement is a vertical displacement of the first end of the armrest with the pivot at the second end of the armrest.

The method controlling the cockpit control inceptor of the first embodiment may include controlling by the first aircraft control command a yaw control of the aircraft; controlling by the second aircraft control command a pitch control of the aircraft; and controlling by the third aircraft control command a roll of the aircraft.

The method controlling the cockpit control inceptor of the second embodiment may include controlling by the first aircraft control command a yaw of the aircraft; controlling by the second aircraft control command a brake and thrust of the aircraft; controlling by the third aircraft control command a roll of the aircraft; and controlling by the fourth aircraft control command a pitch of the aircraft.

The method may further include providing a fifth aircraft control command by rotating the handle around its vertical axis and steering by the fifth aircraft control command an aircraft nose wheel. The fifth control may work in combination with either the first or the second embodiment.

An aircraft control system comprising a cockpit control inceptor as described above.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A cockpit control inceptor (10,100) for an aircraft, comprising:
an armrest (12,120) configured to receive a forearm of a user and to be operated by the forearm of the user in at least one direction, wherein a first end (13,130) of the armrest (12,120) is coupled to a handle;
wherein the armrest (12,120) is connected to a fixed part of the cockpit control inceptor (10,100);
wherein the armrest (12,120) is configured to move relative to the fixed part of the cockpit control inceptor (10,100) to provide a first aircraft control command.

2. The cockpit control inceptor (10,100) for an aircraft of claim 1,
wherein the armrest (12,120) is configured to be displaced around a first axis defined at a second end (17,170) of the armrest (12,120), preferably the first axis is a vertical axis (16,160),
wherein the displacement of the armrest (12,120) around the first axis is configured to provide the first aircraft control command, and/or
wherein the cockpit control inceptor (10,100) comprises a sensor for sensing the position of the armrest (12,120) to create the first aircraft control command.

3. The cockpit control inceptor (10,100) for an aircraft of any preceding claims, wherein the handle coupled to the armrest (12,120) is a side stick (11,110).

4. The cockpit control inceptor (10,100) for an aircraft of any preceding claims,
wherein the side stick (11,110) is configured to rotate around a side-to-side axis (14,140) of the armrest (12,120) to provide a second aircraft control command and/or
wherein the side stick (11,110) is configured to displace around a longitudinal axis (15,150) of the armrest (12,120) to provide a third aircraft control command.

5. The cockpit control inceptor (10,100) for an aircraft of any preceding claims,
wherein the armrest (12,120) is configured to pivot around a second axis, preferably defined at the second end (17,170) of the armrest (12,120), the second axis being a transverse axis of the armrest (12,120),
wherein the pivotal movement of the armrest (12,120) around the second axis is configured to provide a fourth aircraft control command.

6. The cockpit control inceptor (10,100) for an aircraft of claim 4,
wherein the first aircraft control command is configured to control a yaw of the aircraft; and/or
wherein the second aircraft control command is configured to control a pitch of the aircraft; and/or
wherein the third aircraft control command is configured to control a roll of the aircraft.

7. The cockpit control inceptor (10,100) for an aircraft of claim 5,
wherein the first aircraft control command is configured to control a yaw of the aircraft;
wherein the second aircraft control command is configured to control a brake and thrust of the aircraft; and/or
wherein the third aircraft control command is configured to control a roll of the aircraft; and/or
wherein the fourth aircraft control command is configured to control a pitch of the aircraft.

8. The cockpit control inceptor (10,100) for an aircraft of any preceding claims,
wherein the handle is configured to rotate around its vertical axis (16,160) relative to the armrest (12,120) to provide a fifth aircraft control command and
wherein the fifth aircraft control command is configured to steer an aircraft nose wheel.

9. The cockpit control inceptor (10,100) for an aircraft of any preceding claim, further comprising a grip on the side stick (11,110) configured to provide friction between the grip and the fingers or hand of the user.

10. A method of controlling a cockpit control inceptor (10,100) for an aircraft, the method comprising:
providing an armrest (12,120) to receive a forearm of a user and to be operated by the forearm of the user in at least one direction, wherein a first end (13,130) of the armrest (12,120) is coupled to a handle; and
providing a first aircraft control command by moving the armrest (12,120) relative to the fixed part of the cockpit control inceptor (10,100).

11. The method of claim 10, further comprising:
providing the first aircraft control command by displacement of the armrest (12,120) around a first axis defined at a second end (17,170) of the armrest (12,120), preferably the first axis is a vertical axis (16,160), and/or
providing a second aircraft control command by rotating the handle around a side-to-side axis (14,140) of the armrest (12,120), wherein the handle is preferably a side stick (11,110), and/or
providing a third aircraft control command by displacing the side stick (11,110) around a longitudinal axis (15,150) of the armrest (12,120); and/or
providing a fourth aircraft control command by pivoting the armrest (12,120) around a second axis defined by the second end (17,170) of the armrest (12,120), preferably the second axis is a transverse axis of the armrest (12,120).

12. The method of claim 10, further
controlling by the first aircraft control command a yaw of the aircraft;
controlling by the second aircraft control command a pitch of the aircraft; and
controlling by the third aircraft control command a roll of the aircraft.

13. The method of claim 10, further
controlling by the first aircraft control command a yaw of the aircraft;
controlling by the second aircraft control command a brake and thrust of the aircraft;
controlling by the third aircraft control command a roll of the aircraft; and
controlling by the fourth control a pitch of the aircraft.

14. The method of any preceding claims,
providing a fifth control command by rotating the handle around its vertical axis (16,160) relative to the armrest (12,120) and
steering by the fifth control command an aircraft nose wheel.

15. An aircraft control system comprising:
a cockpit control inceptor (10,100) according to any of claims 1 to 9.
